# EUROPEAN PATENT SPECIFICATION

(11) **EP 3 862 178 B1**
(45) Date of publication and mention of the grant of the patent: **23.08.2023**
(21) Application number: 21154423.4
(22) Date of filing: 29.01.2021
(51) Int. Cl.: B30B 15/16, B21D 24/14

(54) **APPARATUS FOR THE CONTROLLED RETURN OF THE STEMS IN CYLINDERS APPLIED TO STAMPING PRESSES**
VORRICHTUNG FÜR DEN KONTROLLIERTEN RÜCKLAUF DER STANGEN IN AN STANZPRESSEN ANGEBRACHTEN ZYLINDERN
APPAREIL POUR LE RETOUR CONTRÔLÉ DE TIGES DANS DES CYLINDRES APPLIQUÉS À DES PRESSES À ESTAMPER

(30) Priority: 06.02.2020 IT 202000002302
(43) Date of publication of application: 11.08.2021
(73) Proprietor: Special Springs S.r.l., 36060 Romano d'Ezzelino (VI) (IT)
(72) Inventor: CAPPELLER, Dante, 36050 Cartigliano VI (IT); FIORESE, Massimo, 36061 Bassano Del Grappa VI (IT); BORDIN, Francesco, 31031 Caerano Di San Marco TV (IT)
(74) Representative: Modiano, Micaela Nadia

(56) References cited:
- EP-A1- 3 115 119
- EP-A1- 3 175 936
- CN-U- 203 044 619
- DE-A1- 4 003 016
- FR-A1- 2 514 692
- FR-A1- 2 667 257
- US-A1- 2006 101 891
- US-A1- 2006 260 379
- US-A1- 2018 243 811

## Description

The present invention relates to an apparatus for the controlled return of the stems in cylinders applied to stamping presses.

Currently, in presses for stamping sheet metal, equipment is used in order to lock the sheet metal to be shaped during the deformation steps.

The sheet metal, in fact, must be locked in multiple points proximate to one or more perimetric edges in order to prevent that perimetric regions from moving in an inappropriate manner between the portions of the die, with respect to the region to be deformed, jeopardizing the desired shaping result.

The equipment currently known comprises usually at least one fluid-operated (gas- and/or oil-operated) actuator for the translational motion of a first sheet presser element, which is adapted to support the sheet metal, during an initial step of a shaping operation.

Such fluid-operated actuator is normally a fluid-operated cylinder.

A first sheet presser element, which is the lower one in the configuration for use, supports the sheet metal so that the sheet metal is located above a first lower die part which is integral with the footing of the press.

Such first sheet presser element is adapted to cooperate with a second sheet presser element, which is instead integral with a second die part, associated with the upper slider of the press.

During the shaping operation, i.e., during the descent of the upper slider of the press, the two sheet presser elements keep a perimetric portion of the sheet metal closed between them.

The fluid-operated cylinders that support the lower sheet presser element are part of an apparatus which also comprises a circuit for supplying the working fluid, i.e., gas or oil.

Such apparatus is provided with adapted means for the delayed return of the stems of said cylinders during the opening step of the press.

When the stem of the cylinder is pushed downward by the action of the press, the fluid, which is inherently compressible, is expelled only partially from the pressurized chamber of the cylinder.

In fact, at the beginning of the step for the extraction of the sheet metal shaped by the press, when the upper slider moves upward again and the cylinders are discharged, the compressed fluid, which is still present inside the chamber of each cylinder, expands, acting with a substantially impulsive thrust on the perimetric portions of the sheet metal.

This can cause warping, inflections and other similar deformations, or even push the entire sheet metal to strike the upper die part, causing irreparable damage.

The means for the delayed return of the stems of the cylinders comprise a hydraulic controller adapted to receive the pressurized oil, which is moved in the discharge ducts under the thrust of the upper slider of the press.

Simply applying a hydraulic accumulator is not enough to eliminate the so-called "spring back" effect of the stem due to the expansion of the compressed fluid that remains in the cylinder at the end of its compression.

In fact, it is necessary to coordinate the operation of the hydraulic plenum chamber (or of the hydraulic plenum chambers) and of the press so as to advance the halting of the injection of oil into the cylinder and avoid even the slightest return of oil into the accumulator if the thrust of the fluid occurs simultaneously with or, worse still, precedes the closure of the one-way valve. The document US 2018/243811 A1 discloses an apparatus in accordance with the preamble of claim 1.

The aim of the present invention is to provide an apparatus for the controlled return of the stems in cylinders applied to stamping presses that is capable of improving the background art in one or more of the aspects indicated above.

Within this aim, an object of the invention is to provide an apparatus for the controlled return of the stems in cylinders applied to stamping presses that avoids the "spring back" effect or in any case reduces it with respect to similar apparatuses of a known type.

Another object of the invention is to provide an apparatus for the controlled return of the stems in cylinders applied to stamping presses that can be applied easily to known and already-operating presses.

Another object of the invention is to provide an apparatus for the controlled return of the stems in cylinders applied to stamping presses in which the force applied by the gas cylinder actuators to the lower sheet presser element can be adjusted.

Moreover, an object of the present invention is to overcome the drawbacks of the background art in a manner that is alternative to any existing solutions.

Another object of the invention is to provide an apparatus for the controlled return of the stems in cylinders applied to stamping presses that is highly reliable, relatively easy to provide and at competitive costs.

This aim and these and other objects which will become better apparent hereinafter are achieved by an apparatus for the controlled return of the stems in cylinders of the types that can be applied to a press for stamping sheet metal, for the translation of a first sheet presser element, said first sheet presser element being in contact with said stems and being proximate to a first die part, said first sheet presser element cooperating with a second sheet presser element which is integral with a slider of said press, said slider supporting a second die part which is complementary to said first die part, said apparatus comprising,
- at least one fluid-operated cylinder,
- at least one hydraulic accumulator which is fluidically connected to said at least one cylinder by means of a hydraulic circuit which comprises:
- a duct for the discharge of the working fluid from said at least one cylinder and a duct/branch for the intake of the working fluid in said hydraulic accumulator,
- a duct for loading said working fluid in said at least one cylinder and a duct/branch for the output of said working fluid from said hydraulic accumulator,
said apparatus comprising, between said discharge duct and said intake duct/branch, at least two branches of said hydraulic circuit:
- a first branch, for the discharge of said working fluid during the translation of said slider towards the bottom dead center,
- a second branch, for the discharge of the overpressure of said residual working fluid within said at least one cylinder, once said slider has reached the bottom dead center, characterized in that said at least one cylinder has:
   - a first one-way valve affecting said discharge duct, and
   - a second one-way valve affecting said loading duct.

Further characteristics and advantages of the invention will become better apparent from the description of a preferred but not exclusive embodiment of the apparatus for the controlled return of the stems in cylinders applied to stamping presses according to the invention, illustrated by way of non-limiting example in the accompanying drawings, wherein:
Figure 1 is a simplified schematic view of an apparatus for the controlled return of the stems in cylinders applied to stamping presses, according to the invention;
Figure 2 is a schematic view of the apparatus of Figure 1 in a first operating step;
Figure 3 is a schematic view of the apparatus of Figure 1 in a second operating step;
Figure 4 is a schematic view of the apparatus of Figure 1 in a third operating step;
Figure 5 is a schematic view of the apparatus of Figure 1 in a fourth operating step;

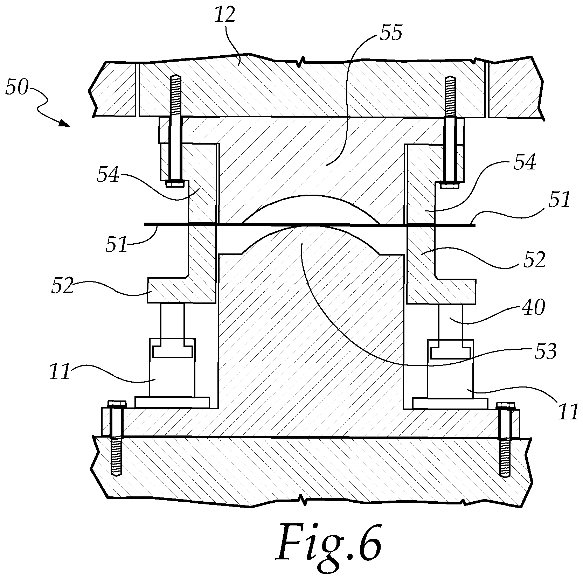

Figure 6 is a sectional view of a press in which the apparatus of Figures 1 to 5 is applied.

With reference to the figures, an apparatus for the controlled return of the stems in cylinders applied to stamping presses, according to the invention, is generally designated by the reference numeral 10.

Such apparatus comprises at least one fluid-operated cylinder 11 provided with a stem 40.

In the example shown in the figures, there are two cylinders 11.

The cylinders 11 are used in a press 50 for stamping sheet metal 51, for the vertical translational motion of a first lower sheet presser element 52, in contact with the stems 40 and proximate to a first lower die part 53.

The first sheet presser element 52 cooperates with a second upper sheet presser element 54 which is integral with a slider 12 of the press 50, which supports a second upper die part 55, which is complementary to the first die part 53.

The apparatus 10 is constituted by a plurality of elements connected in a circuit, with circulating working fluid constituted by oil 13, or the like.

In accordance with the invention, each cylinder 11 has, for example at its end plate 19:
- a first one-way valve 14 affecting a duct 16 for the discharge of the working fluid from the chamber 18 of the cylinder 11,
- a second one-way valve 15 affecting a duct 17 for loading the working fluid in the chamber 18 of the cylinder 11.

The discharge duct 16 and loading duct 17 are fluidically connected to a hydraulic accumulator 20, such as for example a nitrogen-based hydraulic accumulator.

In particular, the discharge duct 16 splits into three branches of the hydraulic circuit of the apparatus 10, for example by means of a hydraulic manifold 21.

The three branches are:
- a first branch 23, for the discharge of the oil 13 during the translation of the slider 12 towards the bottom dead center,
- a second branch 24, for the discharge of the overpressure of the residual oil 13 within the chamber 18, once the slider 12 has reached the bottom dead center,
- a third safety branch 22.

The expression "bottom dead center", in the present description, is meant the lower stroke limit point of the slider 12.

The three hydraulic circuit branches 22, 23 and 24 are extended between the discharge duct 16 and the hydraulic accumulator 20.

The first branch 23 comprises means 25 for discharging the oil 13 from the chamber 18 of the cylinder 11.

The discharge means 25 comprise:
- a pressure limiting valve 26, for example a cartridge valve,
- an adjustable sequence valve 27, adapted to adjust the force contrasting the lowering of the stems 40 of the cylinders 11.

The second branch 24 comprises means 28 for releasing the pressure of the residual oil 13 in the chamber 18 of the cylinder 11 with the slider 12 at the bottom dead center.

The means 28 for releasing the pressure of the residual oil 13 comprise, in turn, a directional valve 29.

The third branch 22 comprises a safety valve 30 at a pressure on the order of 315 bar.

These three branches 22, 23 and 24 merge in a single duct/branch 31, for the oil 13, for intake into the hydraulic accumulator 20.

The apparatus 10 comprises furthermore a duct/branch 32, for the oil 13, for output from the accumulator 20.

The apparatus 10 comprises, starting from the accumulator 20, along the output duct/branch 32, in the following order:
- means 33 for cooling the oil 13, which are constituted by an air/oil radiator,
- means 34 for the rise of the stems of the cylinders 11, which are constituted by a control valve.

In particular, the cooling means 33 are adapted to cool the oil 13.

One or more loading ducts 17 extend from said output duct/branch 32, downstream of the means 34 for the rise of the stems 40 of the cylinders 11.

The operation of the apparatus 10, according to the invention, is as follows.

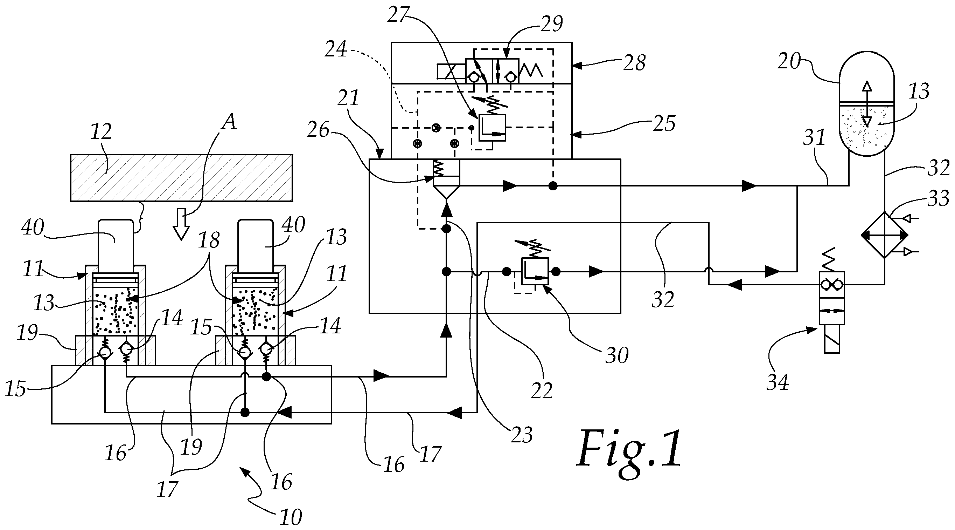

Figure 1 shows the apparatus 10 in an inactive condition before the slider 12 is lowered, in the direction of the arrow A.

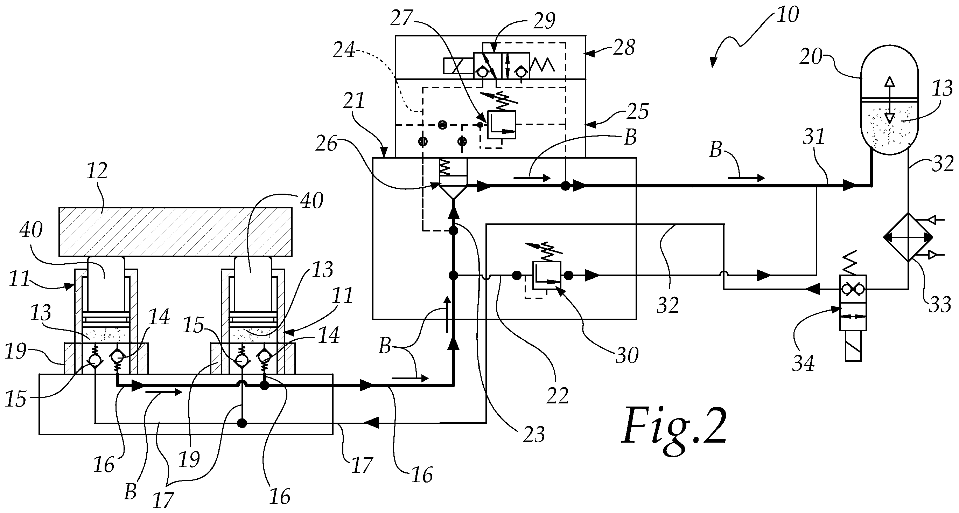

While the slider 12 descends, in the direction of the bottom dead center (Figure 2), the stems 40 are lowered and the oil 13, which is present in the chambers 18 of the cylinders 11, exits through the discharge ducts 16 and reaches the hydraulic accumulator 20 through the first branch 23 and the intake duct/branch 31, following the path indicated by the arrows B.

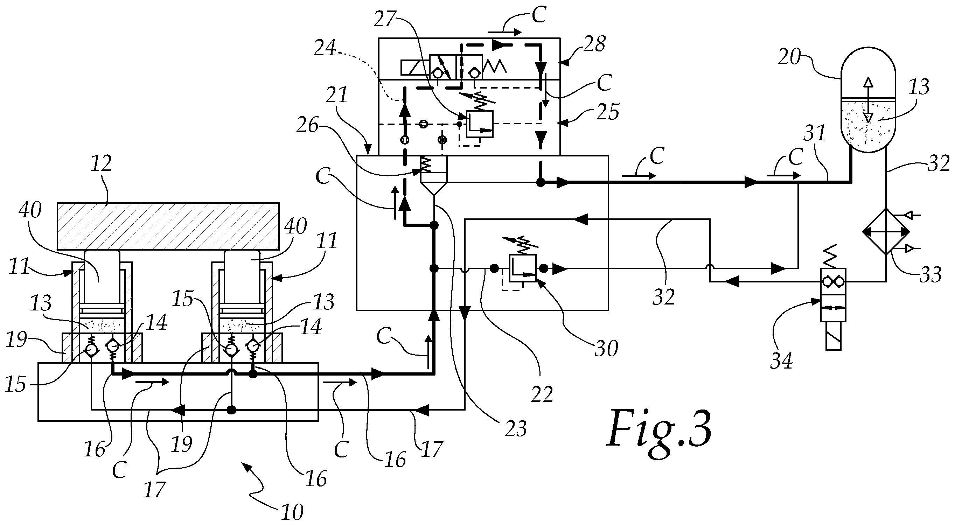

Once the slider 12 has reached the bottom dead center (Figure 3), any overpressure present inside the chambers 18 is reduced/eliminated, reducing/eliminating at the same time the "spring back" effect, actuating the means 28 for releasing the residual pressure, and thus directing the oil 13 that exits from the chamber 18 of the cylinders 11 toward the hydraulic accumulator 20, through the second branch 24 and the intake duct/branch 31, following the path indicated by the arrows C.

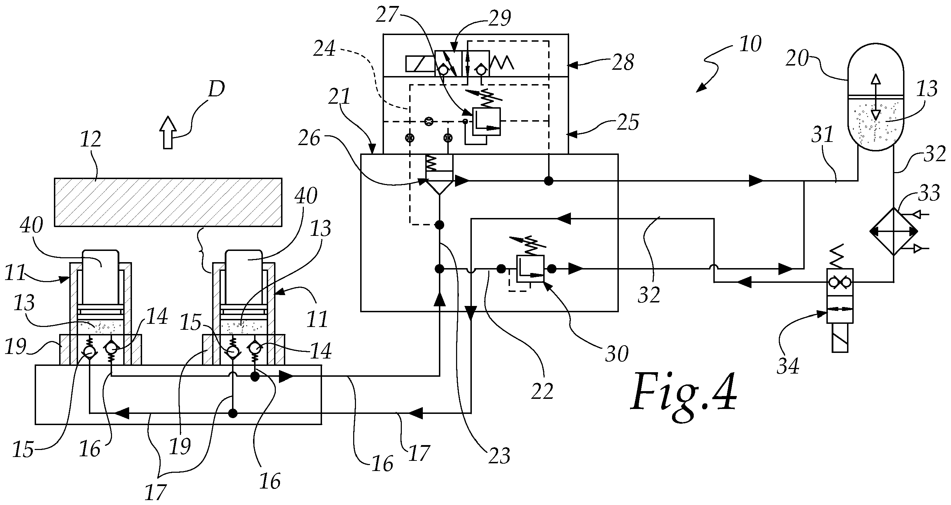

When the slider 12 rises again, in the direction of the arrow D in Figure 4, the stems 40 of the cylinders remain in the position that corresponds to that of the bottom dead center, having reduced/eliminated any overpressures present inside the chambers 18 of the cylinders 11.

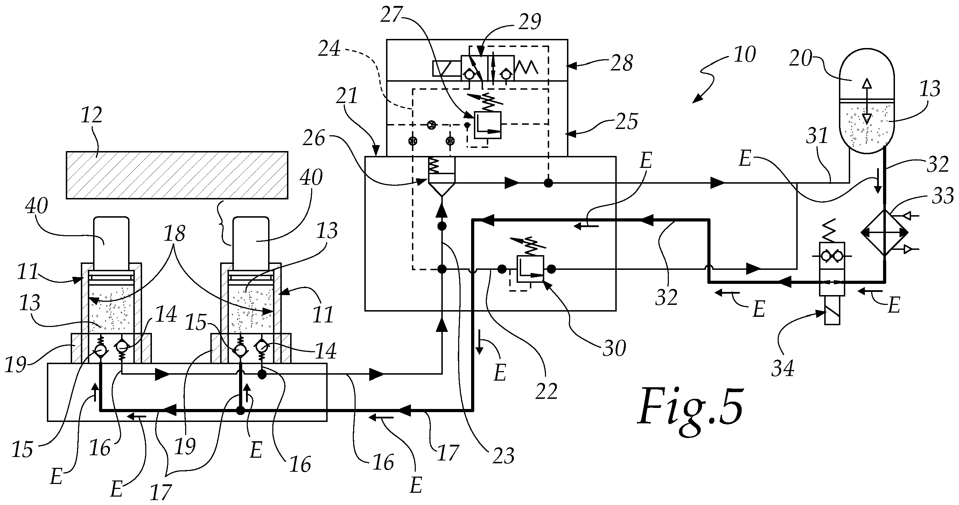

When the slider 12 has returned to the initial position and/or the previously deformed sheet metal has been removed (Figure 5), the stems 40 of the cylinders 11 are returned to the initial position, by actuating the means 34 for the rise of the stems and by directing the oil 13 from the hydraulic accumulator 20 to the chambers 18 of the cylinders, through the output duct/branch 32 and the loading ducts 17, following the path indicated by the arrows E.

In practice it has been found that the invention achieves the intended aim and objects, providing an apparatus for the controlled return of the stems in cylinders applied to stamping presses that avoids the "spring back" effect or in any case reduces it with respect to similar apparatuses of a known type.

The invention provides an apparatus for the controlled return of the stems in cylinders applied to stamping presses that can be applied easily to known and already-operating presses.

Moreover, the invention provides an apparatus for the controlled return of the stems in cylinders applied to stamping presses in which the force exerted by the gas cylinder actuators to the lower sheet presser element can be adjusted.

The invention thus conceived is susceptible of numerous modifications and variations, all of which are within the scope of the appended claims.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (10) for the controlled return of the stems (40) in cylinders (11) of the types that can be applied to a press (50) for stamping sheet metal (51), for the translation of a first sheet presser element (52), said first sheet presser element (52) being in contact with said stems (40) and being proximate to a first die part (53), said first sheet presser element (52) cooperating with a second sheet presser element (54) which is integral with a slider (12) of said press (50), said slider (12) supporting a second die part (55) which is complementary to said first die part (53),
said apparatus (10) comprising:
- at least one fluid-operated cylinder (11),
- at least one hydraulic accumulator (20) which is fluidically connected to said at least one cylinder (11) by means of a hydraulic circuit which comprises:
- a duct (16) for the discharge of the working fluid (13) from said at least one cylinder (11) and a duct/branch (31) for the intake of the working fluid (13) in said hydraulic accumulator (20),
- a duct (17) for loading said working fluid (13) in said at least one cylinder (11) and at duct/branch (32) for the output of said working fluid (13) from said hydraulic accumulator (20),
said apparatus (10) comprising, between said discharge duct (16) and said intake duct/branch (31), at least two branches of said hydraulic circuit:
- a first branch (23), for the discharge of said working fluid (13) during the translation of said slider (12) towards the bottom dead center,
- a second branch (24), for the discharge of the overpressure of said residual working fluid (13) within said at least one cylinder (11), once said slider (12) has reached the bottom dead center,
**characterized in that** said at least one cylinder (11) has:
- a first one-way valve (14) affecting said discharge duct (16), and
- a second one-way valve (15) affecting said loading duct (17).

2. The apparatus (10) according to claim 1, **characterized in that** said first branch (23) comprises means (25) for discharging said working fluid (13) from said at least one cylinder (11).

3. The apparatus (10) according to claim 2, **characterized in that** said discharge means (25) comprise:
- a pressure limiting valve (26),
- an adjustable sequence valve (27).

4. The apparatus (10) according to one or more of the preceding claims, **characterized in that** said second branch (24) comprises means (28) for releasing the pressure of said residual working fluid (13) in said at least one cylinder (11) with said slider (12) at the bottom dead center.

5. The apparatus (10) according to claim 4, **characterized in that** said means (28) for releasing the pressure of said residual working fluid (13) comprise a directional valve (29).

6. The apparatus (10) according to one or more of the preceding claims, **characterized in that** it comprises a third branch (22) of said circuit which is parallel to said first branch (23) and to said second branch (24), said third branch (22) being a safety branch.

7. The apparatus (10) according to claim 6, **characterized in that** said third branch (22) comprises a safety valve (30).

8. The apparatus (10) according to one or more of the preceding claims, **characterized in that** it comprises, starting from said accumulator (20), along said output duct/branch (32), in the following order:
- means (33) for cooling said working fluid (13),
- means (34) for the rise of said stem (40) of said at least one cylinder (11).

9. The apparatus (10) according to claim 8, **characterized in that** said means (33) for the cooling of said working fluid (13) are constituted by a radiator.

10. The apparatus (10) according to claim 8 or 9, **characterized in that** said means (34) for the rise of said stem (40) of said at least one cylinder (11) are constituted by a control valve.

## Patentansprüche

1. Eine Vorrichtung (10) für den kontrollierten Rückhub der Schäfte (40) in Zylindern (11) von den Arten, die an einer Presse (50) zum Stanzen von Metallblech (51) angebracht werden können, zur Translation eines ersten Blechpresselements (52), wobei das erste Blechpresselement (52) in Kontakt mit den Schäften (40) steht und sich in der Nähe eines ersten Matrizenteils (53) befindet; wobei das erste Blechpresselement (52) mit einem zweiten Blechpresselement (54) zusammenwirkt, welches integral mit einem Schieber (12) der Presse (50) ist, wobei der Schieber (12) einen zweiten Matriztenteil (55) trägt, welcher komplementär zu dem ersten Matrizenteil (53) ist,
wobei die Vorrichtung (10) Folgendes umfasst:
- mindestens einen fluidbetätigten Zylinder (11),
- mindestens einen Druckwasserspeicher (20), der mit dem mindestens einen Zylinder (11) über einen Hydraulikkreis fluidisch verbunden ist, welcher Folgendes umfasst:
- eine Leitung (16) zum Ablassen des Arbeitsfluids (13) aus dem mindestens einen Zylinder (11) und eine Leitung/einen Zweig (31) für den Einlass des Arbeitsfluids (13) in den Druckwasserspeicher (20),
- eine Leitung (17) für den Einlass des Arbeitsfluids (13) in den mindestens einen Zylinder (11) und eine Leitung/einen Zweig (32) zum Ablassen des Arbeitsfluids (13) aus dem Druckwasserspeicher (20),
wobei die Vorrichtung (10) zwischen der Ablassleitung (16) und der Einlassleitung/dem Einlasszweig (31) mindestens zwei Zweige des Hydraulikkreises umfasst:
- einen ersten Zweig (23) zum Ablassen des Arbeitsfluids (13) während der Translation des Schiebers (12) zum unteren Totpunkt,
- einen zweiten Zweig (24) zum Ablassen des Überdrucks des restlichen Arbeitsfluids (13) in dem mindestens einen Zylinder (11), sobald der Schieber (12) den unteren Totpunkt erreicht hat;
**dadurch gekennzeichnet, dass** der mindestens eine Zylinder (11) Folgendes hat:
- ein erstes Einwegventil (14), das auf die Ablassleitung (16) wirkt, und
- ein zweites Einwegventil (15), das auf die Einlassleitung (17) wirkt.

2. Die Vorrichtung (10) gemäß Anspruch 1, **dadurch gekennzeichnet, dass** der erste Zweig (23) Mittel (25) zum Ablassen des Arbeitsfluids (13) aus dem mindestens einen Zylinder (11) umfasst.

3. Die Vorrichtung (10) gemäß Anspruch 2, **dadurch gekennzeichnet, dass** die Ablassmittel (25) Folgendes umfassen:
- ein Druckminderventil (26),
- ein einstellbares Zuschaltventil (27).

4. Die Vorrichtung (10) gemäß einem oder mehreren der obigen Ansprüche, **dadurch gekennzeichnet, dass** der zweite Zweig (24) Mittel (28) umfasst, um den Druck des restlichen Arbeitsfluids (13) in dem mindestens einen Zylinder (11) abzulassen, wenn der Schieber (12) sich im unteren Totpunkt befindet.

5. Die Vorrichtung (10) gemäß Anspruch 4, **dadurch gekennzeichnet, dass** die Mittel (28) zum Ablassen des Drucks des restlichen Arbeitsfluids (13) ein Wegeventil (29) umfassen.

6. Die Vorrichtung (10) gemäß einem oder mehreren der obigen Ansprüche, **dadurch gekennzeichnet, dass** sie einen dritten Zweig (22) des Kreises umfasst, der parallel zu dem ersten Zweig (23) und zu dem zweiten Zweig (24) ist, wobei der dritte Zweig (22) ein Sicherheitszweig ist.

7. Die Vorrichtung (10) gemäß Anspruch 6, **dadurch gekennzeichnet, dass** der dritte Zweig (22) ein Sicherheitsventil (30) umfasst.

8. Die Vorrichtung (10) gemäß einem oder mehreren der obigen Ansprüche, **dadurch gekennzeichnet, dass** sie, ausgehend von dem Druckwasserspeicher (20), entlang der Ablassleitung/dem Ablasszweig (32) in Reihenfolge Folgendes umfasst:
- Mittel (33) zum Kühlen des Arbeitsfluids (13),
- Mittel (34) zum Anheben des Schafts (40) des mindestens einen Zylinders (11).

9. Die Vorrichtung (10) gemäß Anspruch 8, **dadurch gekennzeichnet, dass** die Mittel (33) zum Kühlen des Arbeitsfluids (13) aus einem Radiator bestehen.

10. Die Vorrichtung (10) gemäß Anspruch 8 oder 9, **dadurch gekennzeichnet, dass** die Mittel (34) zum Anheben des Schafts (40) des mindestens einen Zylinders (11) aus einem Regelventil bestehen.

## Revendications

1. Appareil (10) destiné au retour contrôlé des tiges (40) dans des cylindres (11) tels que ceux qui peuvent être appliqués à une presse (50) de poinçonnage d'une tôle métallique (51), pour la translation d'un premier élément de pressage de tôle (52), ledit premier élément de pressage de tôle (52) étant en contact avec lesdites tiges (40) et étant proche d'une première partie de matrice (53), ledit premier élément de pressage de tôle (52) coopérant avec un second élément de pressage de tôle (54) qui fait partie intégrante d'un coulisseau (12) de ladite presse (50), ledit coulisseau (12) supportant une seconde partie de matrice (55) qui est complémentaire à ladite première partie de matrice (53),
ledit appareil (10) comprenant :
- au moins un cylindre hydraulique (11),
- au moins un accumulateur hydraulique (20) qui est relié de manière fluiduique audit au moins un cylindre (11) à l'aide d'un circuit hydraulique qui comprend :
- une conduite (16) destinée à l'évacuation du liquide de fonctionnement (13) dudit au moins un cylindre (11) et une conduite/dérivation (31) destinée à l'admission du liquide de fonctionnement (13) dans ledit accumulateur hydraulique (20),
- une conduite (17) destinée au chargement dudit liquide de fonctionnement (13) dans ledit au moins un cylindre (11) et une conduite/dérivation (32) destinée à l'évacuation dudit liquide de fonctionnement (13) dudit accumulateur hydraulique (20),
ledit appareil (10) comprenant, entre ladite conduite d'évacuation (16) et ladite conduite/dérivation d'admission (31), au moins deux dérivations dudit circuit hydraulique :
- une première dérivation (23), destinée à l'évacuation dudit liquide de fonctionnement (13) pendant la translation dudit coulisseau (12) vers le point mort bas,
- une seconde dérivation (24), destinée à l'évacuation de la surpression dudit liquide de fonctionnement résiduel (13) dans ledit au moins un cylindre (11), dès que ledit coulisseau (12) a atteint le point mort bas,
**caractérisé en ce que** ledit au moins un cylindre (11) possède :
- une première vanne unidirectionnelle (14) qui affecte ladite conduite d'évacuation (16), et
- une seconde vanne unidirectionnelle (15) qui affecte ladite conduite de chargement (17).

2. Appareil (10) selon la revendication 1, **caractérisé en ce que** ladite première dérivation (23) comprend un moyen (25) destiné à évacuer ledit liquide de fonctionnement (13) dudit au moins un cylindre (11).

3. Appareil (10) selon la revendication 2, **caractérisé en ce que** ledit moyen d'évacuation (25) comprend :
- une vanne de limitation de pression (26),
- une vanne séquentielle réglable (27).

4. Appareil (10) selon une ou plusieurs des revendications précédentes, **caractérisé en ce que** ladite seconde dérivation (24) comprend un moyen (28) destiné à relâcher la pression dudit liquide de fonctionnement résiduel (13) dans ledit au moins un cylindre (11) avec ledit coulisseau (12) au point mort bas.

5. Appareil (10) selon la revendication 4, **caractérisé en ce que** ledit moyen (28) destiné à relâcher la pression dudit liquide de fonctionnement résiduel (13) comprend une vanne directionnelle (29).

6. Appareil (10) selon une ou plusieurs des revendications précédentes, **caractérisé en ce qu'**il comprend une troisième dérivation (22) dudit circuit qui est parallèle à ladite première dérivation (23) et à ladite seconde dérivation (24), ladite troisième dérivation (22) étant une dérivation de sécurité.

7. Appareil (10) selon la revendication 6, **caractérisé en ce que** ladite troisième dérivation (22) comprend une vanne de sécurité (30).

8. Appareil (10) selon une ou plusieurs des revendications précédentes, **caractérisé en ce qu'**il comprend, en partant dudit accumulateur (20), le long de ladite conduite/dérivation d'évacuation (32), dans l'ordre suivant :
- un moyen (33) destiné à refroidir ledit liquide de refroidissement (13),
- un moyen (34) destiné à faire remonter ladite tige (40) dudit au moins un cylindre (11).

9. Appareil (10) selon la revendication 8, **caractérisé en ce que** ledit moyen (33) destiné au refroidissement dudit liquide de fonctionnement (13) est composé d'un radiateur.

10. Appareil (10) selon la revendication 8 ou 9, **caractérisé en ce que** ledit moyen (34) destiné à faire remonter ladite tige (40) dudit au moins un cylindre (11) est composé d'une soupape de commande.
